# EUROPEAN PATENT APPLICATION

(11) **EP 4 800 684 A1**
(43) Date of publication of application: **02.09.2026**
(21) Application number: 24900823.6
(22) Date of filing: 14.10.2024
(51) Int. Cl.: G09G 5/12, G09G 3/20, G09G 3/3208, G02B 27/01, G06F 1/3206

(54) **HEAD-WEARABLE ELECTRONIC DEVICE HAVING MULTIPLE DISPLAYS, AND METHOD THEREOF**

(30) Priority: 06.12.2023 KR 20230175958; 15.12.2023 KR 20230183799
(71) Applicant: Samsung Electronics Co., Ltd., Suwon-si, Gyeonggi-do 16677 (KR)
(72) Inventor: JANG, Euntaek, Suwon-si Gyeonggi-do 16677 (KR); LEE, Hongkook, Suwon-si Gyeonggi-do 16677 (KR); PARK, Seoungyong, Suwon-si Gyeonggi-do 16677 (KR); HER, Yongkoo, Suwon-si Gyeonggi-do 16677 (KR); KIM, Hongsuk, Suwon-si Gyeonggi-do 16677 (KR); PARK, Sangjun, Suwon-si Gyeonggi-do 16677 (KR); JEONG, Jiesoon, Suwon-si Gyeonggi-do 16677 (KR)
(74) Representative: Gulde & Partner
(86) International application number: PCT/KR2024/015466
(87) International publication number: WO 2025/121635

(57) **Abstract**

A head-wearable electronic device is provided. The head-wearable electronic device may comprise: a head-wearable housing structure; a display assembly including a first display and a second display located over each eye of a user wearing the head-wearable housing structure; a first display driver circuit connected to the first display; a second display driver circuit connected to the second display; and a processor including one or more processing circuits.

## Description

### [Technical Field]

The following descriptions relate to a head-wearable electronic device having multiple displays and a method thereof.

### [Background Art]

A head-wearable electronic device may be used for providing an augmented reality (AR) service, a virtual reality (VR) service, a mixed reality (MR) service, or an extended reality (XR) service. For example, the head-wearable electronic device may include multiple displays respectively positioned in front of eyes of a user. The multiple displays may be used for displaying an image.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

A head-wearable electronic device is described. The head-wearable electronic device may comprise a head-wearable housing structure. The head-wearable electronic device may comprise a display assembly including a first display and a second display respectively positioned over eyes of a user wearing the head-wearable housing structure. The head-wearable electronic device may comprise first display driver circuitry connected to the first display. The head-wearable electronic device may comprise second display driver circuitry connected to the second display. The head-wearable electronic device may comprise a processor comprising one or more processing circuits. The processor may be configured to transmit a command at a first timing to the first display driver circuitry, and transmit the command at a second timing to the second display driver circuitry. The first display driver circuitry may be configured to, based on receiving the command transmitted at the first timing from the processor, transmit, to the second display driver circuitry, a first signal indicating a reception of the command, and defer controlling of the first display according to the command until a second signal indicating a reception of the command is received from the second display driver circuitry, and synchronize the controlling of the first display according to the command with controlling of the second display according to the command by executing the controlling of the first display according to the command based on transmitting, to the second display driver circuitry, the first signal in response to receiving the command transmitted at the first timing from the processor, and receiving the second signal transmitted from the second display driver circuitry in response to receiving the command transmitted at the second timing from the processor.

A head-wearable electronic device is described. The head-wearable electronic device may comprise a head-wearable housing structure. The head-wearable electronic device may comprise a display assembly including a first display and a second display respectively positioned over eyes of a user wearing the head-wearable housing structure. The head-wearable electronic device may comprise first display driver circuitry connected to the first display. The head-wearable electronic device may comprise second display driver circuitry connected to the second display. The head-wearable electronic device may comprise a processor comprising one or more processing circuits. The processor may be configured, while a first signal is transmitted from the first display driver circuitry to the second display driver circuitry and a second signal is transmitted from the second display driver circuitry to the first display driver circuitry, to transmit a command to the first display driver circuitry and transmit the command to the second display driver circuitry. Each of the first display driver circuitry and the second display driver circuitry may be configured to, based on receiving the command paired with a predetermined command from the processor, defer controlling of each of the first display and the second display according to the command, until a signal transmitted from the first display driver circuitry to the second display driver circuitry is changed from the first signal to a third signal and a signal transmitted from the second display driver circuitry to the first display driver circuitry is changed from the second signal to a fourth signal. Each of the first display driver circuitry and the second display driver circuitry may be configured to, based on receiving the command not paired with the predetermined command from the processor, execute controlling of each of the first display and the second display according to the command, while the signal transmitted from the first display driver circuitry to the second display driver circuitry is maintained as the first signal and the signal transmitted from the second display driver circuitry to the first display driver circuitry is maintained as the second signal.

### [Description of the Drawings]

FIG. 1 illustrates an exemplary head-wearable electronic device.
FIG. 2 is a simplified block diagram of an exemplary head-wearable electronic device.
FIG. 3 illustrates an exemplary method executed in a head-wearable electronic device for synchronizing controlling of a first display according to a command transmitted from a processor assembly to first display driver circuitry with controlling of a second display according to the command transmitted from the processor assembly to second display driver circuitry.
FIG. 4 illustrates an exemplary method executed in a head-wearable electronic device for asynchronously executing controlling of a first display according to a command transmitted from a processor assembly to first display driver circuitry and controlling of a second display according to the command transmitted from the processor assembly to second display driver circuitry.
FIG. 5 illustrates an exemplary method executed in a head-wearable electronic device for processing a command and another command transmitted from a processor assembly to each of first display driver circuitry and second display driver circuitry.
FIG. 6 illustrates an exemplary method executed in a head-wearable electronic device for synchronizing releasing a sleep state of a first display according to a command transmitted from a processor assembly to first display driver circuitry with releasing a sleep state of a second display according to the command transmitted from the processor assembly to second display driver circuitry.
FIG. 7 illustrates an exemplary method executed in a head-wearable electronic device for synchronizing changing a brightness level of a first display according to a command transmitted from a processor assembly to first display driver circuitry with changing a brightness level of a second display according to the command transmitted from the processor assembly to second display driver circuitry.
FIG. 8 illustrates an exemplary method executed in a head-wearable electronic device for changing a state of a first screen displayed on a first display at a first speed higher than a second speed of changing a state of a second screen displayed on a second display.
FIG. 9 illustrates an example of a signal exchanged between first display driver circuitry and second display driver circuitry.
FIG. 10 is a block diagram of an electronic device in a network environment according to various embodiments.
FIG. 11 is a block diagram of a display module according to various embodiments.

### [Mode for Invention]

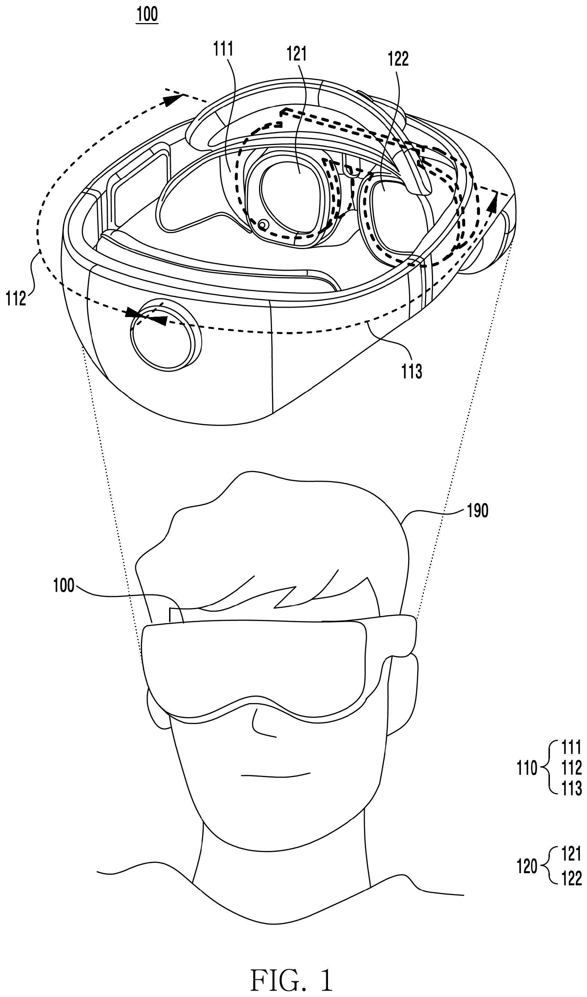

FIG. 1 illustrates an exemplary head-wearable electronic device.

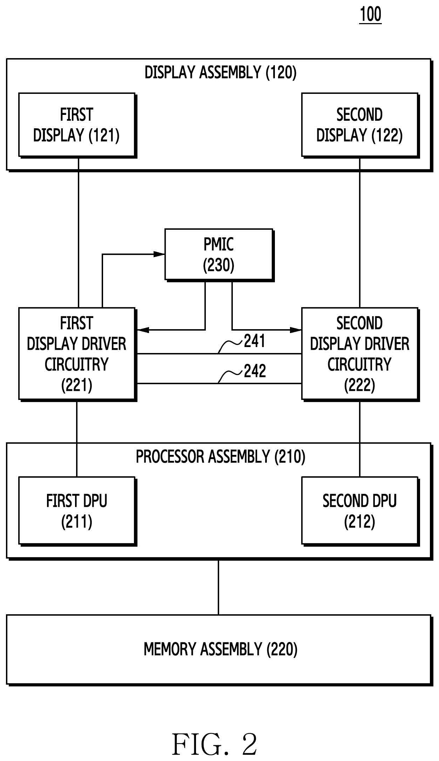

Referring to FIG. 1, a head-wearable electronic device 100 may include a head-wearable housing structure 110. The head-wearable housing structure 110 may at least partially enclose at least a portion of one or more components (exemplified within the description of FIG. 2) of the head-wearable electronic device 100 for protection from debris and other degrading forces external to the head-wearable electronic device 100. The head-wearable housing structure 110 may include an eye frame 111, a left temple frame 112 extended from the eye frame 111, and a right temple frame 113 extended from the eye frame 111. For example, when the head-wearable electronic device 100 is worn by a user 190, the head-wearable housing structure 110 may be configured such that the eye frame 111 is positioned in front of eyes (or at least one eye) of a head of the user 190, the left temple frame 112 is held against a left surface of the head of the user 190, and the right temple frame 113 is held against a right surface of the head of the user 190.

The head-wearable electronic device 100 may include a display assembly 120. The display assembly 120 may be arranged with respect to the head-wearable housing structure 110 (or the eye frame 111). The display assembly 120 may include a first display 121 positioned in front of a left eye of a user 190 wearing the head-wearable housing structure 110 and a second display 122 positioned in front of a right eye of the user 190 wearing the head-wearable housing structure 110. Each of the first display 121 and the second display 122 may include any suitable type of display for presenting visual data to a user wearing the head-wearable housing structure 110 with visible light. As a non-limiting example, the first display 121 and the second display 122 may be usable (or configured) for displaying a visual content as two images separated from each other (e.g., including a first image and a second image) such that the visual content is displayed as a stereoscopic image. For example, the first image may be displayed on the first display 121, and the second image may be displayed on the second display 122. The head-wearable electronic device 100 may include first display driver circuitry used for displaying the first image on the first display 121 and second display driver circuitry used for displaying the second image on the second display 122. The head-wearable electronic device 100 including the first display driver circuitry and the second display driver circuitry is exemplified within the description of FIG. 2.

FIG. 2 is a simplified block diagram of an exemplary head-wearable electronic device.

Referring to FIG. 2, a head-wearable electronic device 100 may include a processor assembly 210, a memory assembly 220, a display assembly 120, first display driver circuitry 221, and second display driver circuitry 222.

The processor assembly 210 may include any operative processing circuit for controlling performance and operations of one or more assemblies (e.g., the display assembly 120) of the head-wearable electronic device 100. For example, the processor assembly 210 may include one or more processing circuits. For example, the processor assembly 210 may include a central processing unit (CPU) (e.g., including a central processing circuit). For example, the processor assembly 210 may include a first display processing unit (DPU) 211 (e.g., including a first display processing circuit) and a second DPU 212 (e.g., including a second display processing circuit). For example, the processor assembly 210 may be implemented as a single chip or a single chip set, such as a system on chip (SoC). For example, the processor assembly 210 may also be implemented as multiple chips or multiple chip sets. For example, the processor assembly 210 may be referred to as one or more processors 210 or a processor 210.

For example, the processor assembly 210 may be used for executing (or running) one or more software applications such as an operating system software application, a firmware software application, a media playback software application, a media editing software application, and/or any other suitable software applications.

The memory assembly 220 may include one or more storage mediums. For example, the one or more storage mediums may include a permanent memory such as a hard drive, a flash memory, a read-only memory (ROM), a semi-permanent memory such as a random access memory (RAM), any other suitable type of storage assembly, or any combination thereof. The memory assembly 220 may include a cache memory which is one or more different types of memories used for temporarily storing data for a function (or feature) of the head-wearable electronic device 100. The memory assembly 220 may be fixedly embedded in the head-wearable electronic device 100 or may be incorporated onto one or more suitable types of components which may be repeatedly inserted into the head-wearable electronic device 100 and repeatedly removed from the head-wearable electronic device 100 (e.g., a subscriber identity module (SIM) card and/or a secure digital (SD) memory card).

The memory assembly 220 may store one or more software applications such as an operating system software application, a firmware software application, a media playback software application, a media editing software application, and/or any other suitable software applications. For example, the one or more software applications may include instructions executable by at least a portion of the processor assembly 210.

The display assembly 120 may include any suitable circuit for displaying, with visible light, visual data (or visual information) generated or obtained by the processor assembly 210. The display assembly 120 may include a first display 121 positioned in front of a left eye of a user (e.g., a user 190) wearing the head-wearable housing structure 110 and a second display 122 positioned in front of a right eye of the user wearing the head-wearable housing structure 110. The first display 121 may include first sub-pixels. As a non-limiting example, the first sub-pixels may include a set of sub-pixels for emitting red light, a set of sub-pixels for emitting green light, a set of sub-pixels for emitting blue light, and/or sub-pixels for emitting white light. For example, each of the first sub-pixels may include a first light emission element for emitting light (e.g., an organic light emitting diode (OLED), an OLED on silicon (OLEDoS), a micro LED, a liquid crystal display (LCD), or a liquid crystal on silicon (LCoS)) and/or a color filter. The second display 122 may include second sub-pixels. As a non-limiting example, the second sub-pixels may include a set of sub-pixels for emitting red light, a set of sub-pixels for emitting green light, a set of sub-pixels for emitting blue light, and/or sub-pixels for emitting white light. For example, each of the first sub-pixels may include a second light emission element for emitting light (e.g., an OLED, an OLEDoS, a micro LED, an LCD, or an LCoS) and/or a color filter.

The first display driver circuitry (or first display driver integrated circuitry) 221 may be connected to the first display 121 among the first display 121 and the second display 122. The first display driver circuitry 221 may be connected to the processor assembly 210. For example, the first display driver circuitry 221 may be connected to the first DPU 211 among the first DPU 211 and the second DPU 212.

The first display driver circuitry 221 may be used for displaying visual information (e.g., data or information regarding the first image exemplified within the description of FIG. 1) transmitted from the processor assembly 210 on the first display 121. For example, the first display driver circuitry 221 may be configured to control the first display 121 for displaying the visual information. As a non-limiting example, the visual information may be transmitted from a CPU within the processor assembly 210 to the first display driver circuitry 221 through the first DPU 211.

The first display driver circuitry 221 may control the first display 121 according to controlling of the processor assembly 210. For example, the first display driver circuitry 221 may control the first display 121 according to a command received from the first DPU 211 (or from a CPU within the processor assembly 210 through the first DPU 211).

The second display driver circuitry (or second display driver integrated circuitry) 222 may be connected to the second display 122 among the first display 121 and the second display 122. The second display driver circuitry 222 may be connected to the processor assembly 210. For example, the second display driver circuitry 222 may be connected to the second DPU 212 among the first DPU 211 and the second DPU 212.

The second display driver circuitry 222 may be used for displaying visual information (e.g., data or information regarding the second image exemplified within the description of FIG. 1) transmitted from the processor assembly 210 on the second display 122. For example, the second display driver circuitry 222 may be configured to control the second display 122 for displaying the visual information. As a non-limiting example, the visual information may be transmitted from the CPU within the processor assembly 210 to the second display driver circuitry 222 through the second DPU 212.

The second display driver circuitry 222 may control the second display 122 according to controlling of the processor assembly 210. For example, the second display driver circuitry 222 may control the second display 122 according to a command received from the second DPU 212 (or from a CPU within the processor assembly 210 through the second DPU 212).

The first display driver circuitry 221 may be connected to the second display driver circuitry 222. For example, the first display driver circuitry 221 may be connected to the second display driver circuitry 222 through a first interface 241 and may be connected to the second display driver circuitry 222 through a second interface 242. For example, the first interface 241 may be used for transmitting a first signal and/or a third signal exemplified below from the first display driver circuitry 221 to the second display driver circuitry 222, and the second interface 242 may be used for transmitting a second signal and/or a fourth signal exemplified below from the second display driver circuitry 222 to the first display 221. As a non-limiting example, the first display driver circuitry 221 may include an output pin (e.g., a general purpose output (GPO) pin) of the first interface 241 and an input pin (e.g., a general purpose input (GPI) pin) of the second interface 242. As a non-limiting example, the second display driver circuitry 222 may include an output pin (e.g., a GPO pin) of the second interface 242 and an input pin (e.g., a GPI pin) of the first interface 241.

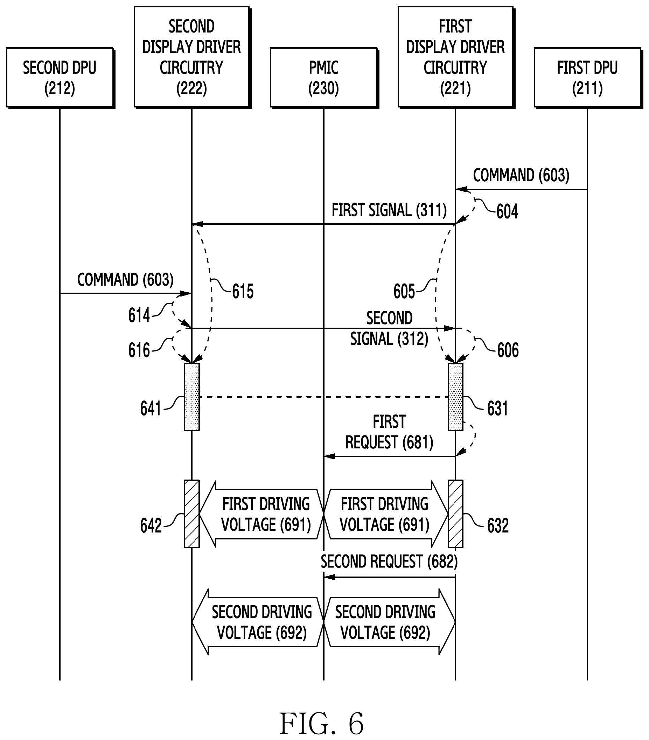

For example, the head-wearable electronic device 100 may further include power management integrated circuitry (PMIC) 230. The PMIC 230 may include any suitable circuit for receiving and/or generating power and applying the power to each of the first display driver circuitry 221 and the second display driver circuitry 222. For example, the PMIC 230 may be used for applying a first driving voltage and a second driving voltage exemplified within the description of FIG. 6 to each of the first display driver circuitry 221 and the second display driver circuitry 222.

For example, the head-wearable electronic device 100 may further include another PMIC (not shown) distinct from the PMIC 230. For example, the another PMIC may be used for applying another voltage distinct from the first driving voltage and the second driving voltage to each of the first display driver circuitry 221 and the second display driver circuitry 222. As a non-limiting example, the PMIC 230 and the another PMIC may be included within a single power supply assembly. As a non-limiting example, the power supply assembly may include a rechargeable battery of the head-wearable electronic device 100.

A command for controlling the display assembly 120 may be transmitted from the processor assembly 210 to each of the first display driver circuitry 221 and the second display driver circuitry 222, while providing visual information using the display assembly 120. Since the command to be executed (or processed) (or used) by the first display driver circuitry 221 for controlling the first display 121 is transmitted from the first DPU 211 and the command to be executed (or processed) (or used) by the second display driver circuitry 222 for controlling the second display 122 is transmitted from the second DPU 212, a first timing at which the command to be executed by the first display driver circuitry 221 for controlling the first display 121 is transmitted to the first display driver circuitry 221 may be different from a second timing at which the command to be executed by the second display driver circuitry 222 for controlling the second display 122 is transmitted to the second display driver circuitry 222. For example, since the first timing is different from the second timing, (immediately (or instantly)) controlling the first display 121 in response to the command transmitted from the first DPU 211 to the first display driver circuitry 221 at the first timing and (immediately) controlling the second display 122 in response to the command transmitted from the second DPU 212 to the second display driver circuitry 222 at the second timing may be asynchronous. For example, the controlling of the first display 121 and the controlling of the second display 122 being asynchronous may cause at least a portion of the display assembly 120 (e.g., a non-intended operation (or an abnormal operation) of the first display 121 and/or the second display 122). As a non-limiting example, in a case that the command is for releasing a sleep state of the display assembly 120, the controlling of the first display 121 and the controlling of the second display 122 being asynchronous may cause displaying an unintended white color (e.g., a screen whitening issue) on a portion of the first display 121 or a portion of the second display 122. As a non-limiting example, in a case that the command is for changing a brightness level of each of the first display 121 and the second display 122, the controlling of the first display 121 and the controlling of the second display 122 being asynchronous may reduce a quality of a screen displayed on the display assembly 120 due to a timing of changing the brightness level of the second display 122 different from a timing of changing the brightness level of the first display 121.

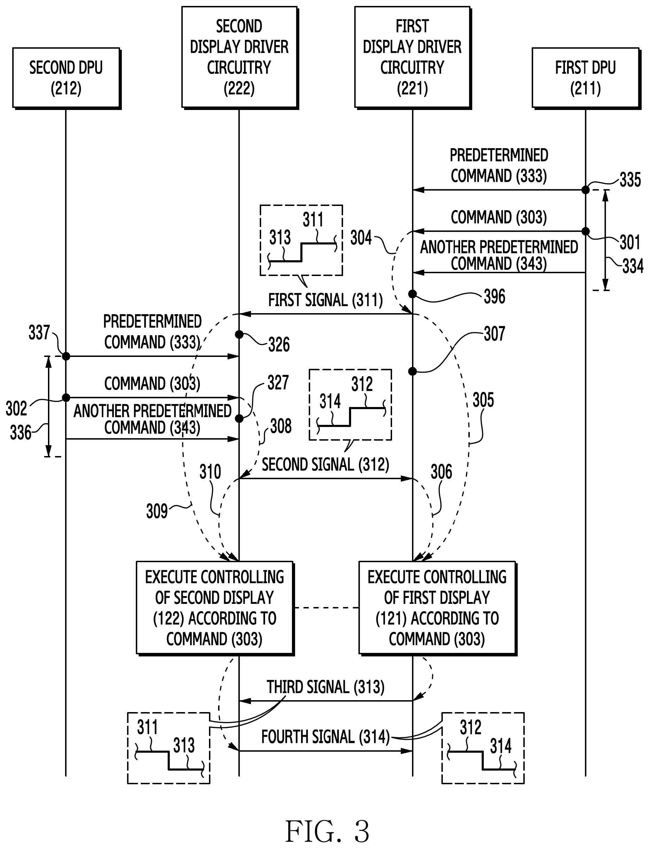

For example, synchronizing the controlling of the first display 121 with the controlling of the second display 122 may be used in the head-wearable electronic device 100. For example, the head-wearable electronic device 100 may include the first interface 241 and the second interface 242 for synchronization between the controlling of the first display 121 and the controlling of the second display 122. Synchronizing the controlling of the first display 121 with the controlling of the second display 122 by using the first interface 241 and the second interface 242 is exemplified within the description of FIG. 3.

FIG. 3 illustrates an exemplary method executed in a head-wearable electronic device for synchronizing controlling of a first display according to a command transmitted from a processor assembly to first display driver circuitry with controlling of a second display according to the command transmitted from the processor assembly to second display driver circuitry.

Referring to FIG. 3, the processor assembly 210 may transmit a command 303 to the first display driver circuitry 221 at a timing 301 and transmit the command 303 to the second display driver circuitry 222 at a timing 302 different from the timing 301. For example, the command 303 may be transmitted from the first DPU 211 to the first display driver circuitry 221 at the timing 301. For example, the command 303 may be transmitted from the second DPU 212 to the second display driver circuitry 222 at the timing 302. As a non-limiting example, the command 303 should be (synchronously (or concurrently)) applied to the first display 121 and the second display 122, but the timing 302 at which the command 303 is transmitted from the second DPU 212 to the second display driver circuitry 222 may be after the timing 301 at which the command 303 is transmitted from the first DPU 211 to the first display driver circuitry 221, due to a difference between a priority of the first DPU 211 and a priority of the second DPU 212.

The first display driver circuitry 221 may synchronize controlling of the first display 121 according to the command 303 transmitted from the first DPU 211 at the timing 301 with controlling of the second display 122 according to the command 303 transmitted from the second DPU 212 at the timing 302. The first display driver circuitry 221 may defer controlling the first display 121 according to the command 303 until the second display driver circuitry 222 receives the command 303 in order to synchronize controlling the first display 121 according to the command 303 transmitted from the first DPU 211 at the timing 301 with controlling the second display 122 according to the command 303 transmitted from the second DPU 212 at the timing 302.

The second display driver circuitry 222 may synchronize controlling the second display 122 according to the command 303 transmitted from the second DPU 212 at the timing 302 with controlling the first display 121 according to the command 303 transmitted from the first DPU 211 at the timing 301. The second display driver circuitry 222 may defer controlling the second display 122 according to the command 303 until the first display driver circuitry 221 receives the command 303 in order to synchronize controlling the second display 122 according to the command 303 transmitted from the second DPU 212 at the timing 302 with controlling the first display 121 according to the command 303 transmitted from the first DPU 211 at the timing 301.

For example, the first display driver circuitry 221 may transmit a first signal 311 to the second display driver circuitry 222 through the first interface 241 as indicated by an arrow 304, in response to receiving the command 303 transmitted from the first DPU 211 at the timing 301, in order to indicate (or inform), to the second display driver circuitry 222, receiving the command 303 from the first DPU 211. For example, the first display driver circuitry 221 may defer controlling the first display 121 according to the command 303 transmitted from the first DPU 211 at the timing 301 until transmitting the first signal 311 to the second display driver circuitry 222 and receiving a second signal 312 from the second display driver circuitry 222 as indicated by an arrow 305 and an arrow 306, in order to synchronize controlling the first display 121 according to the command 303 transmitted from the first DPU 211 at the timing 301 with controlling the second display 122 according to the command 303 transmitted from the second DPU 212 at the timing 302. For example, since the first display driver circuitry 221 is in a state in which the first signal 311 is not transmitted to the second display driver circuitry 222 and the second signal 312 is not received from the second display driver circuitry 222 at a timing 396 after the timing 301 at which the command 303 is received, the first display driver circuitry 221 may not execute controlling of the first display 121 according to the command 303 at the timing 396 (or may refrain from executing the controlling of the first display 121 according to the command 303). For example, since the first display driver circuitry 221 is in a state in which the first signal 311 is transmitted to the second display driver circuitry 222 but the second signal 312 is not received from the second display driver circuitry 222 at a timing 307 after the timing 301 at which the command 303 is received, the first display driver circuitry 221 may not execute controlling of the first display 121 according to the command 303 at the timing 307.

For example, the second display driver circuitry 222 may transmit a second signal 312 to the first display driver circuitry 221 through the second interface 242 as indicated by an arrow 308, in response to receiving the command 303 transmitted from the second DPU 212 at the timing 302, in order to indicate (or inform), to the first display driver circuitry 221, receiving the command 303 from the second DPU 212. For example, the second display driver circuitry 222 may defer controlling the second display 122 according to the command 303 transmitted from the second DPU 212 at the timing 302 until transmitting the second signal 312 to the first display driver circuitry 221 and receiving the first signal 311 from the first display driver circuitry 221 as indicated by an arrow 309 and an arrow 310, in order to synchronize controlling the second display 122 according to the command 303 transmitted from the second DPU 212 at the timing 302 with controlling the first display 121 according to the command 303 transmitted from the first DPU 211 at the timing 301. For example, since the second display driver circuitry 222 is in a state in which the first signal 311 is received from the first display driver circuitry 221 but the command 303 is not received from the second DPU 212 at a timing 326, the second display driver circuitry 222 may not execute controlling of the second display 122 according to the command 303 at the timing 326 (or may refrain from executing of the controlling of the second display 122 according to the command 303). For example, since the second display driver circuitry 222 is in a state in which the first signal 311 is received from the first display driver circuitry 221 but the second signal 312 is not transmitted to the first display driver circuitry 221 at a timing 327 after the timing 302 at which the command 303 is received, the second display driver circuitry 222 may not execute controlling of the second display 122 according to the command 303 at the timing 327.

For example, the first display driver circuitry 221 may execute controlling of the first display 121 according to the command 303, based on transmitting the first signal 311 to the second display driver circuitry 222 as indicated by the arrow 305 and receiving the second signal 312 from the second display driver circuitry 222 as indicated by the arrow 306. For example, the second display driver circuitry 222 may execute controlling of the second display 122 according to the command 303, based on receiving the first signal 311 from the first display driver circuitry 221 as indicated by the arrow 309 and transmitting the second signal 312 to the first display driver circuitry 221 as indicated by the arrow 310. For example, since the first signal 311 transmitted from the first display driver circuitry 221 to the second display driver circuitry 222 indicates that the command 303 is received by the first display driver circuitry 221 and the second signal 312 transmitted from the second display driver circuitry 222 to the first display driver circuitry 221 indicates that the command 303 is received by the second display driver circuitry 222, the controlling of the first display 121 according to the command 303 may be synchronized with the controlling of the second display 122 according to the command 303. As a non-limiting example, the first display driver circuitry 221 may execute the controlling of the first display 121 according to the command 303 in response to a timing of a vertical synchronization signal used for the first display driver circuitry 221. For example, the first display driver circuitry 221 may execute the controlling of the first display 121 according to the command 303, in response to the timing of the vertical synchronization signal caused after transmitting the first signal 311 and receiving the second signal 312. As a non-limiting example, the second display driver circuitry 222 may execute the controlling of the second display 122 according to the command 303, in response to a timing of a vertical synchronization signal used for the second display driver circuitry 222. For example, the second display driver circuitry 222 may execute the controlling of the second display 122 according to the command 303 in response to the timing of the vertical synchronization signal caused after receiving the first signal 311 and transmitting the second signal 312.

As a non-limiting example, the first display driver circuitry 221 may cease transmitting the first signal 311 to the second display driver circuitry 222 and transmit a third signal 313 to the second display driver circuitry 222, based on executing the controlling of the first display 121 according to the command 303, in order to synchronize controlling of the first display 121 according to a command (not shown) to be transmitted from the processor assembly 210 (or the first DPU 211) to the first display driver circuitry 221 with controlling of the second display 122 according to the command to be transmitted from the processor assembly 210 (or the second DPU 212) to the second display driver circuitry 222. For example, a signal provided from the first display driver circuitry 221 to the second display driver circuitry 222 may be changed from the first signal 311 to the third signal 313, in response to executing the controlling of the first display 121 according to the command 303.

As a non-limiting example, the second display driver circuitry 222 may cease transmitting the second signal 312 to the first display driver circuitry 221 and transmit a fourth signal 314 to the first display driver circuitry 221, based on executing the controlling of the second display 122 according to the command 303, in order to synchronize controlling of the second display 122 according to a command (not shown) to be transmitted from the processor assembly 210 (or the second DPU 212) to the second display driver circuitry 222 with controlling of the first display 121 according to the command to be transmitted from the processor assembly 210 (or the first DPU 211) to the first display driver circuitry 221. For example, a signal provided from the second display driver circuitry 222 to the first display driver circuitry 221 may be changed from the second signal 312 to the fourth signal 314, in response to executing the controlling of the second display 122 according to the command 303.

As a non-limiting example, the command 303 may be transmitted from the first DPU 211 to the first display driver circuitry 221 at the timing 301, while the third signal 313 is transmitted from the first display driver circuitry 221 to the second display driver circuitry 222. For example, the first display driver circuitry 221 may change the signal transmitted from the first display driver circuitry 221 to the second display driver circuitry 222 from the third signal 313 to the first signal 311, in response to the command 303 transmitted from the first DPU 211 at the timing 301. For example, the first display driver circuitry 221 may cease transmitting the third signal 313 to the second display driver circuitry 222 and transmit the first signal 313 to the second display driver circuitry 222, in response to the command 303 transmitted from the first DPU 211 at the timing 301.

As a non-limiting example, the command 303 may be transmitted from the second DPU 212 to the second display driver circuitry 222 at the timing 302, while the fourth signal 314 is transmitted from the second display driver circuitry 222 to the first display driver circuitry 221. For example, the second display driver circuitry 222 may change the signal transmitted from the second display driver circuitry 222 to the first display driver circuitry 221 from the fourth signal 314 to the second signal 312, in response to the command 303 transmitted from the second DPU 212 at the timing 302. For example, the second display driver circuitry 222 may cease transmitting the fourth signal 314 to the first display driver circuitry 221 and transmit the second signal 312 to the first display driver circuitry 221, in response to the command 303 transmitted from the second DPU 212 at the timing 302.

As a non-limiting example, the processor assembly 210 may transmit, to each of the first display driver circuitry 221 and the second display driver circuitry 222, the command 333 predetermined before the command 303 is transmitted, in order to indicate (or inform), to each of the first display driver circuitry 221 and the second display driver circuitry 222, that the command 303 causing (or requiring) synchronizing controlling of the first display 121 with controlling of the second display 122 is transmitted from the processor assembly 210.

For example, the first DPU 211 may transmit the predetermined command 333 to the first display driver circuitry 221 at a timing 335, and transmit the command 303 to the first display driver circuitry 221 within a time interval 334 from the timing 335. For example, the first display driver circuitry 221 may recognize that a command (e.g., the command 303) causing (or requiring) synchronizing controlling of the first display 121 with controlling of the second display 122 will be received from the first DPU 211 based on the predetermined command 333 transmitted from the first DPU 211 at the timing 335, and transmit the first signal 311 to the second display driver circuitry 222 without executing controlling of the first display 121 according to the command 303 in accordance with the recognition based on receiving the command 303 transmitted from the first DPU 211 at the timing 301 within the time interval 334. For example, the command 303 transmitted within the time interval 334 may be paired with the predetermined command 333.

For example, the second DPU 212 may transmit the predetermined command 333 to the second display driver circuitry 222 at a timing 337, and transmit the command 303 to the second display driver circuitry 222 within a time interval 336 from the timing 337. As a non-limiting example, a length of the time interval 336 may be (substantially) equal to a length of the time interval 334. For example, the second display driver circuitry 222 may recognize that a command (e.g., the command 303) causing (or requiring) synchronizing controlling of the first display 121 with controlling of the second display 122 will be received from the second DPU 212 based on the predetermined command 333 transmitted from the second DPU 212 at the timing 337, and transmit the second signal 312 to the first display driver circuitry 221 without executing controlling of the second display 122 according to the command 303 in accordance with the recognition based on receiving the command 303 transmitted from the second DPU 212 at the timing 302 within the time interval 336. For example, the command 303 transmitted within the time interval 336 may be paired with the predetermined command 333.

As a non-limiting example, the processor assembly 210 may transmit, to each of the first display driver circuitry 221 and the second display driver circuitry 222, a plurality of commands causing (or requiring) synchronizing controlling of the first display 121 executed by the first display driver circuitry 221 with controlling of the second display 122 executed by the second display driver circuitry 222. For example, the processor assembly 210 may further transmit, to each of the first display driver circuitry 221 and the second display driver circuitry 222, another predetermined command 343 indicating completion of transmission of the plurality of commands after transmitting the plurality of commands, in order to indicate (or inform), to each of the first display driver circuitry 221 and the second display driver circuitry 222, that the plurality of commands will be transmitted.

For example, the first display driver circuitry 221 may store a plurality of commands received from the first DPU 211 after a predetermined command 333 is received in a storage medium (or a storage device) (e.g., memory, a register, or a buffer) of the first display driver circuitry 221, in response to receiving the predetermined command 333 from the first DPU 211, and transmit the first signal 311 to the second display driver circuitry 222, in response to receiving another predetermined command 343 from the first DPU 211.

For example, the second display driver circuitry 222 may store the plurality of commands received from the second DPU 212 after a predetermined command 333 is received in a storage medium (or a storage device) (e.g., memory, a register, or a buffer) of the second display driver circuitry 222, in response to receiving the predetermined command 333 from the second DPU 212, and transmit the second signal 312 to the first display driver circuitry 221, in response to receiving another predetermined command 343 from the second DPU 212.

For example, the first display driver circuitry 221 may control the first display 121 according to the plurality of commands stored in the storage medium of the first display driver circuitry 221, in response to the transmission of the first signal 311 and the reception of the second signal 312. For example, the second display driver circuitry 222 may control the second display 122 according to the plurality of commands stored in the storage medium of the second display driver circuitry 222, in response to the reception of the first signal 311 and the transmission of the second signal 312.

As a non-limiting example, the command 303 may not be transmitted from the second DPU 212 to the second display driver circuitry 222 due to a priority of the second DPU 212 lower than a priority of the first DPU 211. For example, the first display driver circuitry 221 may activate a timer in response to the command 303, in order to prevent controlling of the first display 121 according to the command 303 from not being executed by the command 303 not transmitted from the second DPU 212 to the second display driver circuitry 222. For example, the first display driver circuitry 221 may execute controlling of the first display 121 according to the command 303, in response to checking an expiration of the timer before the second signal 312 is received from the second display driver circuitry 222.

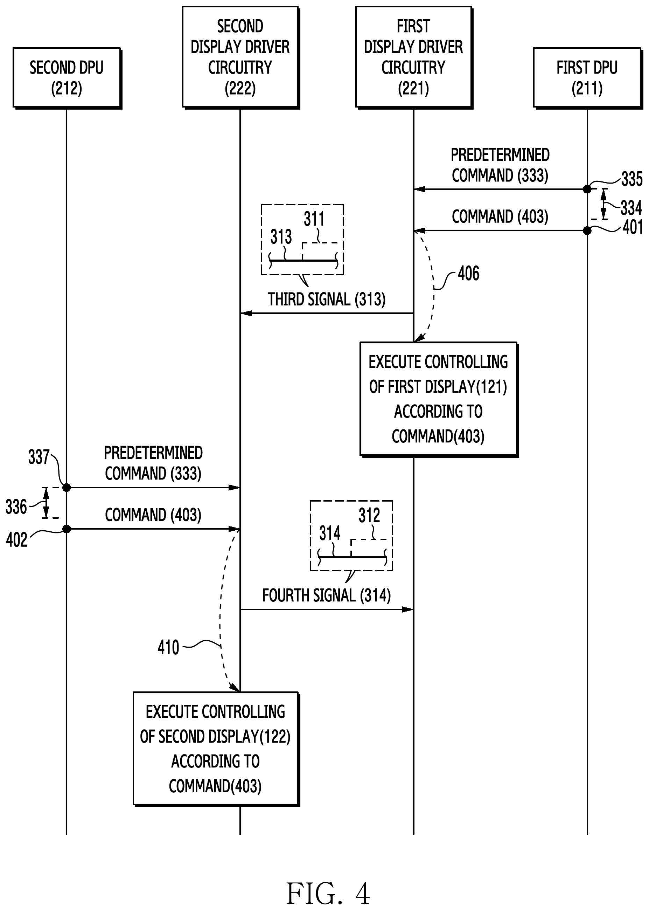

For example, a command transmitted from the processor assembly 210 to each of the first display driver circuitry 221 and the second display driver circuitry 222 may not require (or cause) synchronizing controlling of the first display 121 executed by the first display driver circuitry 221 with controlling of the second display 122 executed by the second display driver circuitry 222. Operations related to such a command are exemplified within the description of FIG. 4.

FIG. 4 illustrates an exemplary method executed in a head-wearable electronic device for asynchronously executing controlling of a first display according to a command transmitted from a processor assembly to first display driver circuitry and controlling of a second display according to the command transmitted from the processor assembly to second display driver circuitry.

Referring to FIG. 4, the processor assembly 210 may transmit, to each of the first display driver circuitry 221 and the second display driver circuitry 222, a command 403 not requiring (or not causing) synchronizing controlling of the second display 122 executed by the second display driver circuitry 222 with controlling of the first display 121 executed by the first display driver circuitry 221. As a non-limiting example, the command 403 may be transmitted from the first DPU 211 to the first display driver circuitry 221 at a timing 401 outside a time interval 334 from a timing 335 at which a predetermined command 333 is transmitted from the first DPU 211 to the first display driver circuitry 221. As a non-limiting example, the command 403 may be transmitted from the second DPU 212 to the second display driver circuitry 222 at a timing 402 outside a time interval 336 from a timing 337 at which the predetermined command 333 is transmitted from the second DPU 212 to the second display driver circuitry 222. As a non-limiting example, the timing 402 may be after the timing 401. For example, the command 403 transmitted outside the time interval 334 may not be paired with the predetermined command 333. For example, the command 403 transmitted outside the time interval 336 may not be paired with the predetermined command 333.

For example, the first display driver circuitry 221 may maintain transmitting a third signal 313 to the second display driver circuitry 222, in response to the command 403 received from the first DPU 211. For example, since controlling of the first display 121 according to the command 403 and controlling of the second display 122 according to the command 403 may be executed asynchronously, the first display driver circuitry 221 may maintain transmitting the third signal 313 to the second display driver circuitry 222, in response to the command 403 received from the first DPU 211. For example, the first display driver circuitry 221 may (immediately) execute controlling of the first display 121 according to the command 403 without checking whether the second display driver circuitry 222 receives the command 403 from the second DPU 212 as indicated by an arrow 406, in response to the command 403 received from the first DPU 211.

For example, the second display driver circuitry 222 may maintain transmitting a fourth signal 314 to the first display driver circuitry 221, in response to the command 403 received from the second DPU 212. For example, since controlling of the first display 121 according to the command 403 and controlling of the second display 122 according to the command 403 may be executed asynchronously, the second display driver circuitry 222 may maintain transmitting the fourth signal 314 to the first display driver circuitry 221, in response to the command 403 received from the second DPU 212. For example, the second display driver circuitry 222 may (immediately) execute controlling of the second display 122 according to the command 403 without checking whether the first display driver circuitry 221 receives the command 403 from the first DPU 211 as indicated by an arrow 410, in response to the command 403 received from the second DPU 212.

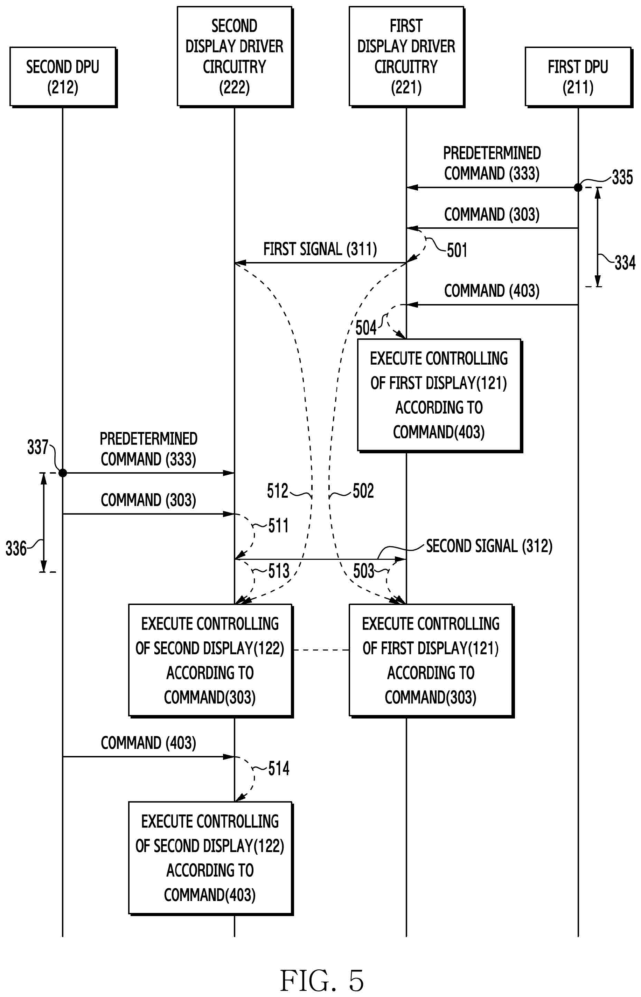

Operations according to the command 303 exemplified within the description of FIG. 3 and operations according to the command 403 exemplified within the description of FIG. 4 may be combined as in the description of FIG. 5.

FIG. 5 illustrates an exemplary method executed in a head-wearable electronic device for processing a command and another command transmitted from a processor assembly to each of first display driver circuitry and second display driver circuitry.

Referring to FIG. 5, the first DPU 211 may transmit a command 303 to the first display driver circuitry 221. For example, the command 303 may be transmitted to the first display driver circuitry 221 within a time interval 334 from a timing 335 at which a predetermined command 333 is transmitted from the first DPU 211 to the first display driver circuitry 221, in order to indicate that controlling of the first display 121 according to the command 303 is synchronized with controlling of the second display 211 according to the command 303.

For example, the first display driver circuitry 221 may transmit a first signal 311 changed from a third signal 313 to the second display driver circuitry 222 as indicated by an arrow 501, in response to the command 303 received from the first DPU 211.

For example, the first DPU 211 may transmit a command 403 to the first display driver circuitry 221. For example, the command 403 may be transmitted to the first display driver circuitry 221 outside the time interval 334, in order to indicate that controlling of the first display 121 according to the command 403 is executed independently of controlling of the second display 122.

For example, the first display driver circuitry 221 may execute controlling of the first display 121 according to the command 403 as indicated by an arrow 504, in response to the command 403 received from the first DPU 211.

For example, the second DPU 212 may transmit the command 303 to the second display driver circuitry 222. For example, the command 303 may be transmitted to the second display driver circuitry 222 within a time interval 336 from a timing 337 at which the predetermined command 333 is transmitted from the second DPU 212 to the second display driver circuitry 222, in order to indicate that controlling of the second display 122 according to the command 303 is synchronized with controlling of the first display 121 according to the command 303.

For example, the second display driver circuitry 222 may transmit a second signal 312 changed from a fourth signal 314 to the first display driver circuitry 221 as indicated by an arrow 51,1 in response to the command 303 received from the second DPU 212.

For example, the second display driver circuitry 222 may execute controlling of the second display 122 according to the command 303 as indicated by an arrow 512 and an arrow 513, based on the first signal 311 received from the first display driver circuitry 221 after the command 303 is received and the second signal 312 transmitted to the first display driver circuitry 211 after the command 303 is received. For example, the first display driver circuitry 221 may execute controlling of the first display 201 according to the command 303 as indicated by an arrow 502 and an arrow 503, based on the first signal 311 transmitted to the second display driver circuitry 222 after the command 303 is received and the second signal 312 received from the second display driver circuitry 222 after the command 303 is received. For example, since the controlling of the first display 201 according to the command 303 and the controlling of the second display 202 according to the command 303 are executed based on the first signal 311 and the second signal 312, the controlling of the first display 121 according to the command 303 and the controlling of the second display 122 according to the command 303 may be synchronized.

For example, the second DPU 212 may transmit the command 403 to the second display driver circuitry 222 after the controlling of the second display 122 according to the command 303 is executed. For example, the command 403 may be transmitted to the second display driver circuitry 221 outside the time interval 336, in order to indicate that controlling of the first display 212 according to the command 403 is executed independently of controlling of the first display 121.

For example, the second display driver circuitry 222 may execute controlling of the second display 122 according to the command 403 as indicated by an arrow 514, in response to the command 403 received from the second DPU 212. The controlling of the second display 122 according to the command 403 may be executed after the controlling of the first display 121 according to the command 403 is executed.

As described above, the head-wearable electronic device 100 may synchronize processing the command 303 using the first display driver circuitry 221 with processing the command 303 using the second display driver circuitry 222, by including the first interface 241 and the second interface 242 between the first display driver circuitry 221 and the second display driver circuitry 222.

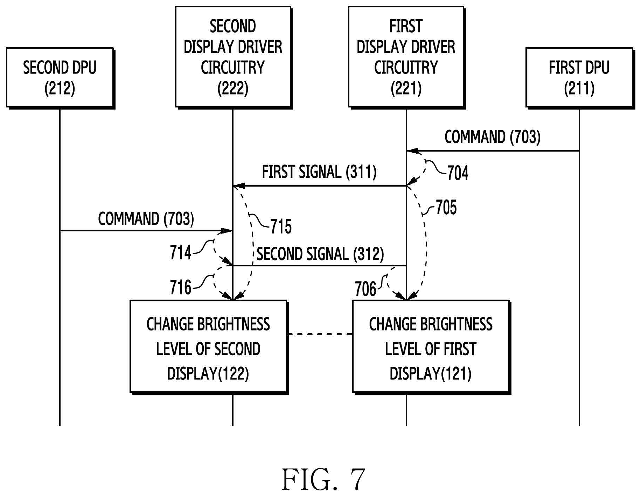

For example, a command causing synchronizing controlling of the first display 121 with controlling of the second display 122, such as the command 303, may be variously defined for the head-wearable electronic device 100. As a non-limiting example, the command may include a command for releasing a sleep state of the display assembly 120. As a non-limiting example, the command may include a command for changing each of a brightness level of the first display 121 and a brightness level of the second display 122. Operations related to the command for releasing the sleep state of the display assembly 120 are exemplified within the description of FIG. 6, and operations related to the command for changing each of the brightness level of the first display 121 and the brightness level of the second display 122 are exemplified within the description of FIG. 7.

FIG. 6 illustrates an exemplary method executed in a head-wearable electronic device for synchronizing releasing a sleep state of a first display according to a command transmitted from a processor assembly to first display driver circuitry with releasing a sleep state of a second display according to the command transmitted from the processor assembly to second display driver circuitry.

Referring to FIG. 6, the first DPU 211 may transmit a command 603 to the first display driver circuitry 221. The command 603 may be transmitted for releasing a sleep state of the display assembly 120 (or the first display 121 and the second display 122). Controlling of the first display 121 according to the command 603 executed by the first display driver circuitry 221 may be synchronized with controlling of the second display 122 according to the command 603 executed by the second display driver circuitry 222. Although not illustrated within FIG. 6, the command 603 may be transmitted from the first DPU 211 within a time interval (e.g., the time interval 334) from a timing (e.g., the timing 335) at which the predetermined command 333 is transmitted from the first DPU 211 to the first display driver circuitry 221. For example, the first display driver circuitry 221 may transmit the first signal 311 to the second display driver circuitry 222 as indicated by an arrow 604, in response to the command 603 received from the first DPU 211.

The second DPU 212 may transmit a command 603 to the second display driver circuitry 222. The command 603 may be transmitted for releasing a sleep state of the display assembly 120 (or the first display 121 and the second display 122). Controlling of the second display 122 according to the command 603 executed by the second display driver circuitry 222 may be synchronized with controlling of the first display 121 according to the command 603 executed by the first display driver circuitry 221. Although not illustrated within FIG. 6, the command 603 may be transmitted from the second DPU 212 within a time interval (e.g., the time interval 336) from a timing (e.g., the timing 337) at which the predetermined command 333 is transmitted from the second DPU 212 to the first display driver circuitry 221. For example, the second display driver circuitry 222 may transmit the second signal 312 to the first display driver circuitry 221 as indicated by an arrow 614, in response to the command 603 received from the second DPU 212.

The first display driver circuitry 221 may execute controlling 631 of the first display 121 according to the command 603 as indicated by an arrow 605 and an arrow 606, in response to transmitting the first signal 311 to the second display driver circuitry 222 and receiving the second signal 312 from the second display driver circuitry 222. For example, controlling 631 of the first display 121 according to the command 603 may include initializing the first display driver circuitry 221 for releasing a sleep state of the first display 121. As a non-limiting example, controlling 631 of the first display 121 executed according to the command 603 for releasing the sleep state of the first display 121 may include initializing voltages respectively applied to a first electrode (or a first terminal, or a first end) and a second electrode of the first light emission element exemplified within the description of FIG. 2.

The second display driver circuitry 222 may execute controlling 641 of the second display 122 according to the command 603 as indicated by an arrow 615 and an arrow 616, in response to transmitting the second signal 312 to the first display driver circuitry 221 and receiving the first signal 311 from the first display driver circuitry 221. For example, controlling 641 of the second display 122 according to the command 603 may include initializing the second display driver circuitry 222 for releasing a sleep state of the second display 122. As a non-limiting example, controlling 641 of the second display 122 executed according to the command 603 for releasing the sleep state of the second display 122 may include initializing voltages respectively applied to a second electrode and a second electrode of the second light emission element exemplified within the description of FIG. 2. For example, since initializing the voltages respectively applied to the first electrode and the second electrode of the first light emission element and initializing the voltages respectively applied to the first electrode and the second electrode of the second light emission element are executed based on the first signal 311 and the second signal 312, initializing the voltages respectively applied to the first electrode and the second electrode of the first light emission element (hereinafter, referred to as a first initialization) and initializing the voltages respectively applied to the first electrode and the second electrode of the second light emission element (hereinafter, referred to as a second initialization) may be synchronized.

For example, the first display driver circuitry 221 may further execute transmitting a first request 681 to the PMIC 230, compared with the second display driver circuitry 222. For example, the first request 681 may be transmitted from the first display driver circuitry 221 to the PMIC 230, based on the first initialization. For example, the first request 681 may include a request to apply a first driving voltage 691 (e.g., VDD) for the first electrode (e.g., an anode electrode of the first light emission element) of the first light emission element and apply the first driving voltage 691 for a first electrode (e.g., an anode electrode of the second light emission element) of the second light emission element. As a non-limiting example, since the PMIC 230 does not have an ability to receive requests (e.g., the first request 681 and a second request 682) from all of a plurality of display driver circuitry (e.g., the first display driver circuitry 221 and the second display driver circuitry 222), the first request 681 may be transmitted to the PMIC 230 from the first display driver circuitry 221 among the first display driver circuitry 221 and the second display driver circuitry 222.

For example, the PMIC 230 may apply the first driving voltage 691 to each of the first display driver circuitry 221 and the second display driver circuitry 222, in response to the first request 681. For example, since the first driving voltage 691 is applied in response to the first request 681 from the first display driver circuitry 221, the first driving voltage 691 may be applied from the PMIC 230 to the first display driver circuitry 221 after the first initialization is completed (or executed). For example, although the first driving voltage 691 is applied from the PMIC 230 to the second display driver circuitry 222 without a request from the second display driver circuitry 222, the first driving voltage 691 is applied from the PMIC 230 to the second display driver circuitry 222 in response to the first request 681 transmitted from the first display driver circuitry 221 to the PMIC 230 after the first initialization synchronized with the second initialization is completed (or executed), and thus the first driving voltage 691 may be applied from the PMIC 230 to the second display driver circuitry 222 after the second initialization is completed (or executed). For example, the electronic device 100 may reduce a probability that a malfunction of the second display 122 occurs due to applying the first driving voltage 691 to the second display driver circuitry 222 before the second initialization is completed through the operations exemplified above.

For example, the first display driver circuitry 221 may execute controlling 632 of the first display 121 for obtaining a second driving voltage 692 (e.g., VSS) for a second electrode (e.g., a cathode electrode of the first light emission element) of the first light emission element from the PMIC 230, while obtaining the first driving voltage 691 from the PMIC 230. For example, the controlling 632 may be executed after the controlling 631 is executed according to the command 603.

For example, the second display driver circuitry 222 may execute controlling 642 of the second display 122 for obtaining the second driving voltage 692 for the second electrode of the second light emission element from the PMIC 230, while obtaining the first driving voltage 691 from the PMIC 230. For example, the controlling 642 may be executed after the controlling 641 is executed according to the command 603.

For example, the first display driver circuitry 221 may further execute transmitting a second request 682 to the PMIC 230, compared with the second display driver circuitry 222. For example, the second request 682 may be transmitted from the first display driver circuitry 221 to the PMIC 230, based on execution (or completion) of the controlling 632. For example, the second request 682 may include a request to apply the second driving voltage 692 for each of the second electrode of the first light emission element and the second electrode of the second light emission element. For example, the second request 682 may be transmitted to the PMIC 230 from the first display driver circuitry 221 among the first display driver circuitry 221 and the second display driver circuitry 222.

For example, the PMIC 230 may apply the second driving voltage 692 to each of the first display driver circuitry 221 and the second display driver circuitry 222, in response to the second request 682. For example, since the second driving voltage 692 is applied in response to the second request 682 from the first display driver circuitry 221, the second driving voltage 692 may be applied from the PMIC 230 to the first display driver circuitry 221 after the controlling 632 is completed (or executed). For example, although the second driving voltage 692 is applied from the PMIC 230 to the second display driver circuitry 222 without a request from the second display driver circuitry 222, the second driving voltage 692 is applied from the PMIC 230 to the second display driver circuitry 222 in response to the second request 682 transmitted from the first display driver circuitry 221 to the PMIC 230 after the controlling 632 synchronized with the controlling 642 is completed (or executed), and thus the second driving voltage 692 may be applied from the PMIC 230 to the second display driver circuitry 222 after the controlling 642 is completed (or executed). For example, the electronic device 100 may reduce a probability that a malfunction of the second display 122 occurs due to applying the second driving voltage 692 to the second display driver circuitry 222 before the controlling 642 is completed through the operations exemplified above.

Although not illustrated within FIG. 6, the first display driver circuitry 221 may release a sleep state of the first display 121 using the first driving voltage 691 and the second driving voltage 692. For example, the second display driver circuitry 222 may release a sleep state of the second display 122 using the first driving voltage 691 and the second driving voltage 692. For example, releasing the sleep state of the first display 121 according to the command 603 may be synchronized with releasing the sleep state of the second display 122 according to the command 603. For example, a state of the first display 121 may be changed to a state for power on of the first display 121 according to releasing the sleep state of the first display 121. For example, a state of the second display 122 may be changed to a state for power on of the second display 122 according to releasing the sleep state of the second display 122.

FIG. 7 illustrates an exemplary method executed in a head-wearable electronic device for synchronizing changing a brightness level of a first display according to a command transmitted from a processor assembly to first display driver circuitry with changing a brightness level of a second display according to the command transmitted from the processor assembly to second display driver circuitry.

Referring to FIG. 7, the first DPU 211 may transmit a command 703 to the first display driver circuitry 221. The command 703 may be transmitted for changing a brightness level of the first display 121. As a non-limiting example, the command 703 may be obtained by the processor assembly 210 (or a CPU within the processor assembly 210) in response to a change in illuminance around the head-wearable electronic device 100, and may be transmitted from the first DPU 211. As a non-limiting example, the command 703 may be obtained by the processor assembly 210 (or a CPU within the processor assembly 210) in response to a change in a refresh rate of a first screen displayed on the first display 121, and may be transmitted from the first DPU 211. Since a change in a brightness level of the first display 121 asynchronous with a change in a brightness level of the second display 122 may reduce a quality of a visual content displayed through the display assembly 120, controlling of the first display 121 according to the command 703 executed by the first display driver circuitry 221 may be synchronized with controlling of the second display 122 according to the command 703 executed by the second display driver circuitry 222. Although not illustrated within FIG. 7, the command 703 may be transmitted from the first DPU 211 within a time interval (e.g., the time interval 334) from a timing (e.g., the timing 335) at which the predetermined command 333 is transmitted from the first DPU 211 to the first display driver circuitry 221. For example, the first display driver circuitry 221 may transmit the first signal 311 to the second display driver circuitry 222 as indicated by an arrow 704, in response to the command 703 received from the first DPU 211.

The second DPU 212 may transmit the command 703 to the second display driver circuitry 222. The command 703 may be transmitted for changing a brightness level of the second display 122. Since a change in a brightness level of the second display 122 asynchronous with a change in a brightness level of the first display 121 may reduce a quality of a visual content displayed through the display assembly 120, controlling of the second display 122 according to the command 703 executed by the second display driver circuitry 222 may be synchronized with controlling of the first display 121 according to the command 703 executed by the first display driver circuitry 221. Although not illustrated within FIG. 7, the command 703 may be transmitted from the second DPU 212 within a time interval (e.g., the time interval 336) from a timing (e.g., the timing 337) at which the predetermined command 333 is transmitted from the second DPU 212 to the first display driver circuitry 221. For example, the second display driver circuitry 222 may transmit the second signal 312 to the first display driver circuitry 221 as indicated by an arrow 714, in response to the command 703 received from the second DPU 212.

The first display driver circuitry 221 may change a brightness level of the first display 121 according to the command 703 as indicated by an arrow 705 and an arrow 706, on a condition of transmitting the first signal 311 to the second display driver circuitry 222 and receiving the second signal 312 from the second display driver circuitry 222. The second display driver circuitry 222 may change a brightness level of the second display 122 according to the command 703 as indicated by an arrow 715 and an arrow 716, on a condition of receiving the first signal 311 from the first display driver circuitry 221 and transmitting the second signal 312 to the first display driver circuitry 221. For example, since a change in the brightness level of the first display 121 according to the command 703 and a change in the brightness level of the second display 122 according to the command 703 are executed based on the first signal 311 and the second signal 312, the change in the brightness level of the second display 122 according to the command 703 may be synchronized with the change in the brightness level of the first display 121 according to the command 703. For example, the head-wearable electronic device 100 may prevent a reduction in a quality of a screen displayed on the display assembly 120, by synchronizing the change in the brightness level of the second display 122 according to the command 703 with the change in the brightness level of the first display 121 according to the command 703.

As a non-limiting example, the second display 122 may be viewed by a right eye which is a dominant eye of a user wearing the head-wearable electronic device 100, and the first display 121 may be viewed by a left eye of the user. For example, a visual quality (e.g., resolution, refresh rate, frame per second (FPS), bitrate, bit depth, and the like) of a second screen displayed on the second display 122 may be substantially the same as (or correspond to) a visual quality (e.g., resolution, refresh rate, FPS, bitrate, bit depth, and the like) of a first screen displayed on the first display 121. For example, while the first screen and the second screen are respectively displayed on the first display 121 and the second display 122 with substantially the same visual quality, a predetermined event (or a specified event) (e.g., display of the first screen and the second screen being maintained for a reference time or more, a type of content provided through the first screen and the second screen being a reference type, and/or a remaining level of a rechargeable battery of the electronic device 100 being lower than a reference level) may be detected, caused, identified, or recognized. For example, a visual quality (e.g., resolution, refresh rate, FPS, bitrate, bit depth, and the like) of the first screen viewed by the left eye of the user wearing the head-wearable electronic device 100 may be reduced based on the predetermined event, compared with the visual quality (resolution, refresh rate, FPS, bitrate, bit depth, and the like) of the second screen viewed by the right eye of the user wearing the head-wearable electronic device 100.

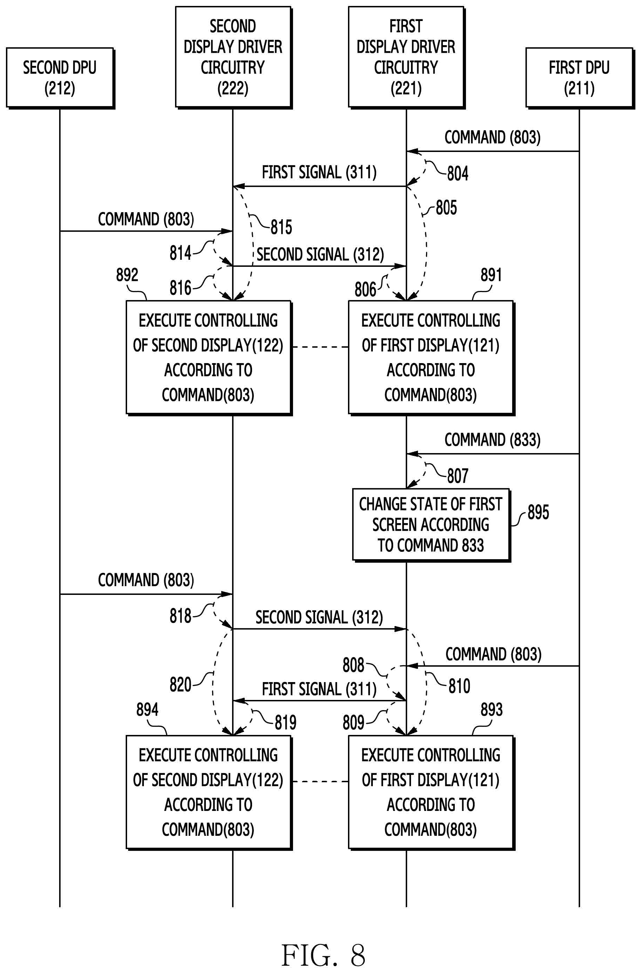

As a non-limiting example, a speed of changing a state of the first screen displayed on the first display 121 controlled by the first display driver circuitry 221 may be different from a speed of changing a state of the second screen displayed on the second display 122 controlled by the second display driver circuitry 222. For example, a dominant eye of a user (e.g., the user 190) wearing the head-wearable electronic device 100 may be changed according to a movement of a gaze of the user and/or a movement of a head of the user. As a non-limiting example, the dominant eye may be at least temporarily changed from the right eye to the left eye, according to the movement of the gaze and/or the movement of the head (e.g., when the user looks at a left side). For example, while the second screen (e.g., a screen viewed by the right eye which is the dominant eye) is displayed with a visual quality (e.g., resolution, refresh rate, FPS, bitrate, bit depth, and the like) higher than a visual quality (e.g., resolution, refresh rate, FPS, bitrate, bit depth, and the like) of the first screen (e.g., a screen viewed by the left eye), the dominant eye may be changed from the right eye to the left eye. For example, when the dominant eye is changed from the right eye to the left eye, changing a state of the first screen with a first speed higher than a second speed of changing a state of the second screen may be executed in the head-wearable electronic device 100. Changing a state of the first screen with the first speed higher than the second speed of changing a state of the second screen is exemplified within the description of FIG. 8.

FIG. 8 illustrates an exemplary method executed in a head-wearable electronic device for changing a state of a first screen displayed on a first display at a first speed higher than a second speed of changing a state of a second screen displayed on a second display.

Referring to FIG. 8, the first DPU 211 may transmit, to the first display driver circuitry 221, a command 803 causing (or controlling) the first display driver circuitry 221 to change a state of a first screen displayed on the first display 121. As a non-limiting example, changing the state of the first screen according to the command 803 may include changing a brightness level of the first screen, changing a refresh rate of the first screen, and/or changing a color temperature of the first screen. Although not illustrated within FIG. 8, the command 803 may be transmitted from the first DPU 211 within a time interval (e.g., the time interval 334) from a timing (e.g., the timing 335) at which the predetermined command 333 is transmitted from the first DPU 211 to the first display driver circuitry 221. For example, the first display driver circuitry 221 may transmit a first signal 311 to the second display driver circuitry 222 as indicated by an arrow 804, in response to the command 803 received from the first DPU 211.

The second DPU 212 may transmit, to the second display driver circuitry 222, a command 803 causing (or controlling) the second display driver circuitry 222 to change a state of a second screen displayed on the second display 122. As a non-limiting example, changing the state of the second screen according to the command 803 may include changing a brightness level of the second screen, changing a refresh rate of the second screen, and/or changing a color temperature of the second screen. Although not illustrated within FIG. 8, the command 803 may be transmitted from the second DPU 212 within a time interval (e.g., the time interval 336) from a timing (e.g., the timing 337) at which the predetermined command 333 is transmitted from the second DPU 212 to the first display driver circuitry 221. For example, the second display driver circuitry 222 may transmit a second signal 312 to the first display driver circuitry 221 as indicated by an arrow 814, in response to the command 803 received from the second DPU 212.

The first display driver circuitry 221 may execute changing 891 of a state of the first screen according to the command 803 as indicated by an arrow 805 and an arrow 806, based on transmitting the first signal 311 to the second display driver circuitry 222 and receiving the second signal 312 from the second display driver circuitry 222. The second display driver circuitry 222 may execute changing 892 of a state of the second screen according to the command 803 as indicated by an arrow 815 and an arrow 816, based on receiving the first signal 311 from the first display driver circuitry 221 and transmitting the second signal 312 to the first display driver circuitry 221. For example, since changing 891 of the state of the first screen and changing 892 of the state of the second screen are executed based on the first signal 311 and the second signal 312, changing 891 of the state of the first screen and changing 892 of the state of the second screen may be synchronized. Although not illustrated within FIG. 8, a signal transmitted from the first display driver circuitry 221 to the second display driver circuitry 222 may be changed from the first signal 311 to a third signal 313 in response to changing 891 of the state of the first screen, and a signal transmitted from the second display driver circuitry 222 to the first display driver circuitry 221 may be changed from the second signal 312 to a fourth signal 314 in response to changing 892 of the state of the second screen.

For example, the first DPU 211 may transmit a command 833 to the first display driver circuitry 221. For example, the command 833 may be a command for changing the state of the first screen like the command 803, but unlike the command 803, the command 833 may be transmitted from the first DPU 211 for executing changing the state of the first screen among changing the state of the first screen and changing the state of the second screen. As a non-limiting example, the command 833 may be transmitted from the first DPU 211 to the first display driver circuitry 221, in response to receiving a signal indicating that the command 803 is transmitted from the second DPU 212. As a non-limiting example, the command 833 may be transmitted from the first DPU 211 to the first display driver circuitry 221 after a reference time elapses from a timing at which the command 803 is transmitted. Although not illustrated within FIG. 8, the command 833 may be transmitted from the first DPU 211 outside the time interval from a timing at which the predetermined command 333 is transmitted from the first DPU 211 to the first display driver circuitry 221, unlike the command 803.

For example, the first display driver circuitry 221 may execute changing 895 of the state of the first screen according to the command 833 as indicated by an arrow 807, in response to receiving the command 833. For example, the first display driver circuitry 221 may maintain a signal transmitted from the first display driver circuitry 221 to the second display driver circuitry 222 as the third signal 313 independently of receiving the command 833.

For example, the second DPU 212 may transmit the command 803 to the second display driver circuitry 222 again, after first transmitting the command 803 to the second display driver circuitry 222. For example, the second display driver circuitry 222 may transmit the second signal 312 to the first display driver circuitry 221 as indicated by an arrow 818, in response to the command 803 received from the second DPU 212.

For example, the first DPU 211 may transmit the command 803 to the first display driver circuitry 221 again, after transmitting the command 833. For example, the command 803 may be transmitted from the first DPU 211 to the first display driver circuitry 221, while the second signal 312 is transmitted from the second display driver circuitry 222 to the first display driver circuitry 221. For example, the first display driver circuitry 221 may transmit the first signal 311 to the second display driver circuitry 222 as indicated by an arrow 808, in response to the command 803 received from the first DPU 211.

The first display driver circuitry 221 may execute changing 893 of a state of the first screen according to the command 803 as indicated by an arrow 809 and an arrow 810, based on transmitting the first signal 311 to the second display driver circuitry 222 and receiving the second signal 312 from the second display driver circuitry 222. The second display driver circuitry 222 may execute changing 894 of a state of the second screen according to the command 803 as indicated by an arrow 819 and an arrow 820, based on receiving the first signal 311 from the first display driver circuitry 221 and transmitting the second signal 312 to the first display driver circuitry 221. For example, since changing 893 of the state of the first screen and changing 894 of the state of the second screen are executed based on the first signal 311 and the second signal 312, changing 893 of the state of the first screen and changing 894 of the state of the second screen may be synchronized.

As described above, since changing 895 of the state of the first screen is executed between changing 892 of the state of the second screen synchronized with changing 891 of the state of the first screen and changing 894 of the state of the second screen synchronized with changing 893 of the state of the first screen, the first speed of changing the state of the first screen may be faster than the second speed of changing the state of the second screen.

For example, the electronic device 100 may control the first display 121 with a first speed faster than a second speed of controlling the second display 122 by alternately executing transmitting the command 833 from the first DPU 211 to the first display driver circuitry 221 and transmitting the command 803 from the first DPU 211 to the first display driver circuitry 221 together with transmitting the command 803 from the second DPU 212 to the second display driver circuitry 222. For example, when the dominant eye is changed, the electronic device 100 may enhance a quality of a screen displayed on the display assembly 120 through the operations exemplified above.

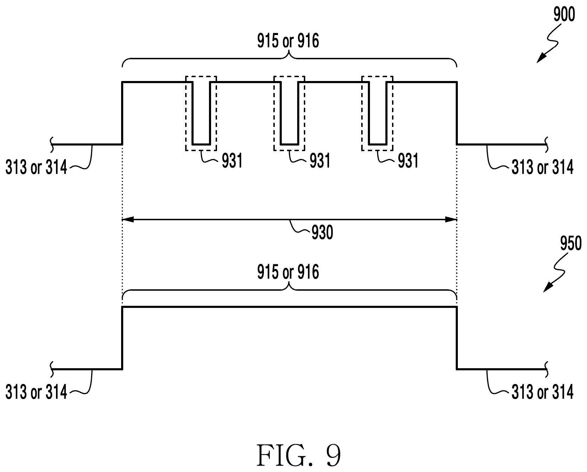

The first signal 311 and the second signal 312 exemplified within the description of FIG. 3 to FIG. 8 may be replaced with a fifth signal and a sixth signal, respectively. The fifth signal and the sixth signal are exemplified within the description of FIG. 9.

FIG. 9 illustrates an example of a signal exchanged between first display driver circuitry and second display driver circuitry.

Referring to FIG. 9, the first signal 311 may be replaced with a fifth signal 915. For example, the fifth signal 915 may be defined or formed within a time interval 930 (e.g., a time interval corresponding to a refresh rate of a screen displayed on the first display 121) of a vertical synchronization signal for the first display driver circuitry 221. For example, the fifth signal 915 may further indicate, to the second display driver circuitry 222, the number of one or more commands transmitted from the first DPU 211 to the first display driver circuitry 221 for controlling of the first display 121 synchronized with controlling of the second display 122, compared with the first signal 311. For example, the fifth signal 915 may include one or more portions 931 respectively corresponding to a pulse signal within the time interval 930, as in a state 900. For example, the number of the one or more portions 931 of the fifth signal 915 may correspond to the number of the one or more commands transmitted from the first DPU 211 to the first display driver circuitry 221 for controlling of the first display 121 synchronized with controlling of the second display 122. For example, the fifth signal 915 within the state 900 may indicate that the number of the one or more commands is three.

For example, the fifth signal 915 may further indicate a malfunction state of the first display driver circuitry 221, compared with the first signal 311. For example, in a case that the first display driver circuitry 221 which has received a command transmitted from the first DPU 211 for controlling of the first display 121 synchronized with controlling of the second display 122 is in a malfunction state, the first display driver circuitry 221 may transmit, to the second display driver circuitry 222 through the first interface 241, the fifth signal 915 not including one or more portions corresponding to a pulse signal, as in a state 950.

For example, the second signal 312 may be replaced with a sixth signal 916. For example, the sixth signal 916 may be defined or formed within a time interval 930 of a vertical synchronization signal for the second display driver circuitry 222. For example, the sixth signal 916 may further indicate, to the first display driver circuitry 221, the number of one or more commands transmitted from the second DPU 212 to the second display driver circuitry 222 for controlling of the second display 122 synchronized with controlling of the first display 121, compared with the second signal 312. For example, the sixth signal 916 may include one or more portions 931 respectively corresponding to a pulse signal within the time interval 930, as in the state 900. For example, the number of the one or more portions 931 of the sixth signal 916 may correspond to the number of the one or more commands transmitted from the second DPU 212 to the second display driver circuitry 222 for controlling of the second display 122 synchronized with controlling of the first display 121. For example, the sixth signal 916 within the state 900 may indicate that the number of the one or more commands is three.

For example, the sixth signal 916 may further indicate a malfunction state of the second display driver circuitry 222, compared with the second signal 312. For example, in a case that the second display driver circuitry 222 which has received a command transmitted from the second DPU 212 for controlling of the second display 122 synchronized with controlling of the first display 121 is in a malfunction state, the second display driver circuitry 222 may transmit, to the first display driver circuitry 221 through the second interface 242, the sixth signal 916 not including one or more portions corresponding to a pulse signal, as in the state 950.

The operations exemplified within the above description executed in the head-wearable electronic device 100 are merely exemplary. The operations may be executed in an electronic device including a display assembly including multiple display driver circuitry and multiple displays. For example, the electronic device may include a foldable electronic device such as a foldable type smartphone.

The operations exemplified within the above description may be executed by an electronic device exemplified within the following description.

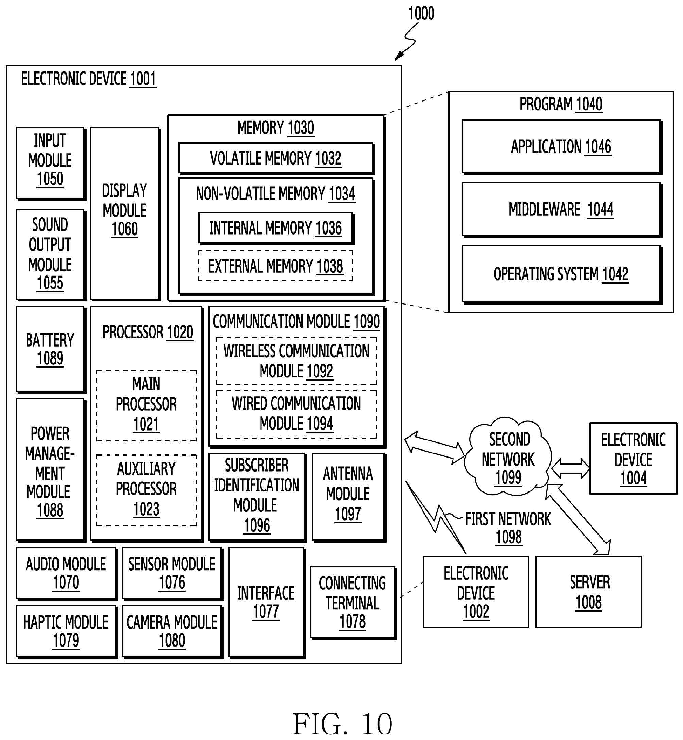

FIG. 10 is a block diagram illustrating an electronic device 1001 in a network environment 1000 according to various embodiments. Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to an embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 1064dB or less) for implementing mMTC, or U-plane latency (e.g., 0.5ms or less for each of downlink (DL) and uplink (UL), or a round trip of 10ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

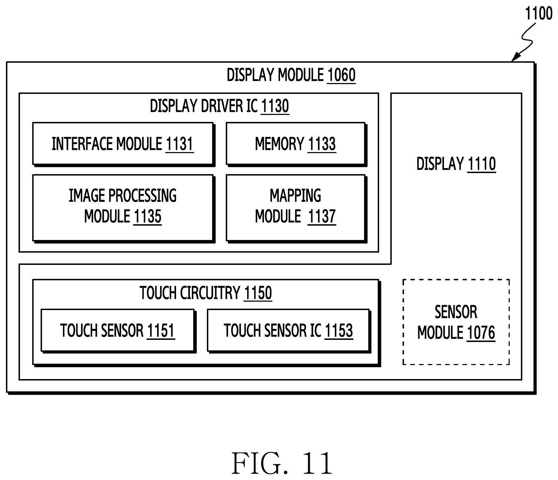

FIG. 11 is a block diagram 1100 illustrating the display module 1060 according to various embodiments. Referring to FIG. 11, the display module 1060 may include a display 1110 and a display driver integrated circuit (DDI) 1130 to control the display 1110. The DDI 1130 may include an interface module 1131, memory 1133 (e.g., buffer memory), an image processing module 1135, or a mapping module 1137. The DDI 1130 may receive image information that contains image data or an image control signal corresponding to a command to control the image data from another component of the electronic device 1001 via the interface module 1131. For example, according to an embodiment, the image information may be received from the processor 1020 (e.g., the main processor 1021 (e.g., an application processor)) or the auxiliary processor 1023 (e.g., a graphics processing unit) operated independently from the function of the main processor 1021. The DDI 1130 may communicate, for example, with touch circuitry 1150 or the sensor module 1076 via the interface module 1131. The DDI 1130 may also store at least part of the received image information in the memory 1133, for example, on a frame by frame basis. The image processing module 1135 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1110. The mapping module 1137 may generate a voltage value or a current value corresponding to the image data pre-processed or post-processed by the image processing module 1135. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1110 may be driven, for example, based at least in part on the voltage value or the current value such that visual information (e.g., a text, an image, or an icon) corresponding to the image data may be displayed via the display 1110.

According to an embodiment, the display module 1060 may further include the touch circuitry 1150. The touch circuitry 1150 may include a touch sensor 1151 and a touch sensor IC 1153 to control the touch sensor 1151. The touch sensor IC 1153 may control the touch sensor 1151 to sense a touch input or a hovering input with respect to a certain position on the display 1110. To achieve this, for example, the touch sensor 1151 may detect (e.g., measure) a change in a signal (e.g., a voltage, a quantity of light, a resistance, or a quantity of one or more electric charges) corresponding to the certain position on the display 1110. The touch circuitry 1150 may provide input information (e.g., a position, an area, a pressure, or a time) indicative of the touch input or the hovering input detected via the touch sensor 1151 to the processor 1020. According to an embodiment, at least part (e.g., the touch sensor IC 1153) of the touch circuitry 1150 may be formed as part of the display 1110 or the DDI 1130, or as part of another component (e.g., the auxiliary processor 1023) disposed outside the display module 1060.

According to an embodiment, the display module 1060 may further include at least one sensor (e.g., a fingerprint sensor, an iris sensor, a pressure sensor, or an illuminance sensor) of the sensor module 1076 or a control circuit for the at least one sensor. In such a case, the at least one sensor or the control circuit for the at least one sensor may be embedded in one portion of a component (e.g., the display 1110, the DDI 1130, or the touch circuitry 1150)) of the display module 1060. For example, when the sensor module 1076 embedded in the display module 1060 includes a biometric sensor (e.g., a fingerprint sensor), the biometric sensor may obtain biometric information (e.g., a fingerprint image) corresponding to a touch input received via a portion of the display 1110. As another example, when the sensor module 1076 embedded in the display module 1060 includes a pressure sensor, the pressure sensor may obtain pressure information corresponding to a touch input received via a partial or whole area of the display 1110. According to an embodiment, the touch sensor 1151 or the sensor module 1076 may be disposed between pixels in a pixel layer of the display 1110, or over or under the pixel layer.

As described above, a head-wearable electronic device (e.g., the head-wearable electronic device 100) may comprise a head-wearable housing structure (e.g., the head-wearable housing structure 110), a display assembly (e.g., the display 120) including a first display (e.g., the first display 121) and a second display (e.g., the second display 122) respectively positioned in front of eyes of a user wearing the head-wearable housing structure, first display driver circuitry (e.g., the first display driver circuitry 221) connected to the first display, second display driver circuitry (e.g., the second display driver circuitry 222) connected to the second display, a processor assembly (e.g., the processor assembly 210) including one or more processing circuits, and a memory assembly (e.g., the memory assembly 220). The memory assembly may store instructions causing at least a portion of the processor assembly to transmit a command to the first display driver circuitry at a first timing and transmit the command to the second display driver circuitry at a second timing. The memory assembly may store instructions causing the first display driver circuitry to, based on receiving the command transmitted at the first timing from the processor assembly, transmit, to the second display driver circuitry, a first signal indicating a reception of the command, and defer controlling of the first display according to the command until a second signal indicating a reception of the command is received from the second display driver circuitry, and synchronize the controlling of the first display according to the command with controlling of the second display according to the command by executing the controlling of the first display according to the command based on transmitting, to the second display driver circuitry, the first signal in response to receiving the command transmitted at the first timing from the processor assembly, and receiving the second signal transmitted from the second display driver circuitry in response to receiving the command transmitted at the second timing from the processor assembly.

For example, the memory assembly may store instructions causing the second display driver circuitry to, synchronize the controlling of the second display according to the command with the controlling of the first display according to the command by executing the controlling of the second display according to the command based on receiving the first signal transmitted from the first display driver circuitry in response to receiving the command transmitted at the first timing from the processor assembly, and transmitting the second signal to the first display driver circuitry in response to receiving the command transmitted at the second timing from the processor assembly.

For example, the memory assembly may store instructions causing the first display driver circuitry to, based on executing the controlling of the first display according to the command, cease transmitting the first signal to the second display driver circuitry and transmit a third signal to the second display driver circuitry. For example, the memory assembly may store instructions causing the second display driver circuitry to, based on executing the controlling of the second display according to the command, cease transmitting the second signal to the first display driver circuitry and transmit a fourth signal to the first display driver circuitry.

For example, the memory assembly may store instructions causing the first display driver circuitry to, while the third signal is transmitted to the second display driver circuitry and the fourth signal is received from the second display driver circuitry, receive the command transmitted at the first timing from the processor assembly. For example, the memory assembly may store instructions causing the second display driver circuitry to, while the third signal is received from the first display driver circuitry and the fourth signal is transmitted to the second display driver circuitry, receive the command transmitted at the second timing from the processor assembly.

For example, the head-wearable electronic device may comprise a first interface connecting the first display driver circuitry to the second display driver circuitry for the first signal and the third signal that are transmitted from the first display driver circuitry to the second display driver circuitry, and a second interface connecting the second display driver circuity to the first display driver circuitry for the second signal and the fourth signal that are transmitted from the second display driver circuitry to the first display driver circuitry.

For example, the memory assembly may store instructions causing the processor assembly to, before the command is transmitted to the first display driver circuitry at the first timing, transmit, to the first display driver circuitry, a predetermined command, before the command is transmitted to the second display driver circuitry at the second timing, transmit, to the second display driver circuitry, the predetermined command. For example, the memory assembly may store instructions causing the first display driver circuitry to, based on receiving, after the predetermined command is received, the command transmitted at the first timing from the processor assembly, cease transmitting the third signal to the second display driver circuitry, and defer the controlling of the first display according to the command, until transmitting the first signal to the second display driver circuitry and receiving the second signal from the second display driver circuitry. For example, the memory assembly may store instructions causing the second display driver circuitry to, based on receiving, after the predetermined command is received, the command transmitted at the second timing from the processor assembly, cease transmitting the fourth signal to the first display driver circuitry, and defer the controlling of the second display according to the command, until transmitting the second signal to the first display driver circuitry and receiving the first signal from the first display driver circuitry.

For example, the memory assembly may store instructions causing the processor assembly to transmit, to the first display driver circuitry, another command at a third timing different from the first and second timings without transmitting the predetermined command to the first display driver circuitry, transmit, to the second display driver circuitry, the another command at a fourth timing different from the first, second, and third timings without transmitting the predetermined command to the second display driver circuitry. For example, the memory assembly may store instructions causing the first display driver circuitry to, in response to receiving the another command transmitted at the third timing from the processor assembly, maintain the third signal transmitted to the second display driver circuitry and execute controlling of the first display according to the another command. For example, the memory assembly may store instructions causing the second display driver circuitry to, in response to receiving the another command transmitted at the fourth timing from the processor assembly, maintain the fourth signal transmitted to the first display driver circuitry and execute controlling of the second display according to the another command. For example, the controlling of the first display according to the another command is executed independently of executing the controlling the second display according to the another command.

For example, the head-wearable electronic device may comprise power management integrated circuitry (PMIC). For example, the first display may include first sub-pixels. For example, the second display may include second sub-pixels. For example, the command may indicate releasing a sleep state of the display assembly. For example, the memory assembly may store instructions causing the first display driver circuitry to, based on receiving the command transmitted at the first timing from the processor, until transmitting the first signal to the second display driver circuitry and receiving the second signal from the second display driver circuitry, defer the controlling of the first display according to the command through deferring initializing voltages applied to a first and second electrodes of a first light emission element in each of the first sub-pixels, and based on transmitting the first signal to the second display driver circuitry and receiving the second signal from the second display driver circuitry, synchronize releasing a sleep state of the first display according to the command with releasing a sleep state of the second display according to the command by executing the controlling of the first display according to the command through initializing the voltages respectively applied to the first and second electrodes of the first light emission element, and after the voltages respective applied to the first and second electrodes of the first light emission element are initialized, transmitting, to the PMIC, a first request to cause the PMIC to apply, to each of the first electrode of the first light emission element and a first electrode of the second light emission element, a first driving voltage, and transmitting, to the PMIC, a second request to cause the PMIC to apply, to each of the second electrode of the first light emission element and a second electrode of the second light emission element, a second driving voltage.

For example, the memory assembly may store instructions causing the second display driver circuitry to, based on receiving the first signal from the first display driver circuitry and transmitting the second signal to the first display driver circuitry, execute the controlling of the second display according to the command through initializing voltages applied to the first and second electrodes of the second light emission element. For example, the memory assembly may store instructions causing the first display driver circuitry to release the sleep state of the first display using the first driving voltage applied from the PMIC in response to the first request from the first display driver circuitry to the PMIC, and the second driving voltage applied from the PMIC in response to the second request from the first display driver circuitry to the PMIC. For example, the memory assembly may store instructions causing the second display driver circuitry to, after the voltages applied to the first and second electrodes of the second light emission element are initialized, obtain the first driving voltage applied from the PMIC in response to the first request from the first display driver circuitry to the PMIC and the second driving voltage applied from the PMIC in response to the second request from the first display driver circuitry to the PMIC, and release the sleep state of the second display using the first driving voltage applied from the PMIC to the second display driver circuity, and the second driving voltage applied from the PMIC to the second display driver circuitry.

For example, the command may indicate changing a brightness level of each of the first and second displays. For example, the memory assembly may store instructions causing the first display driver circuitry to, based on receiving the command transmitted at the first timing from the processor assembly, until transmitting the first signal to the second display driver circuitry and receiving the second signal from the second display driver circuitry, defer the controlling of the first display according to the command through deferring changing a brightness level of the first display, and based on transmitting the first signal to the second display driver circuitry and receiving the second signal from the second display driver circuitry, synchronize changing the brightness level of the first display according to the command with changing a brightness level of the second display according to the command by executing the controlling of the first display according to the command in accordance with changing the brightness level of the first display.

For example, the memory assembly may store instructions causing the second display driver circuitry to, based on receiving the first signal from the first display driver circuitry and transmitting the second signal to the first display driver circuitry, execute the controlling of the second display according to the command through changing the brightness level of the second display.

For example, the process assembly may include a first display processing unit (DPU) connected to the first display driver circuitry, and a second DPU connected to the second display driver circuitry. For example, the memory assembly may store instructions causing the processor assembly to, transmit the command at the first timing to the first display driver circuitry using the first DPU, and transmit the command at the second timing to the second display driver circuitry using the second DPU.

For example, the memory assembly may store instructions causing the first display driver circuitry to, in response to a timing of a vertical synchronization signal for the first display caused after transmitting the first signal to the second display driver circuitry and receiving the second signal from the second display driver circuitry, execute the controlling of the first display according to the command.

For example, the memory assembly may store instructions causing the second display driver circuitry to, in response to a timing of a vertical synchronization signal for the second display caused after receiving the first signal from the first display driver circuitry and transmitting the second signal to the first display driver circuitry, execute the controlling of the second display according to the command.

For example, the memory assembly may store instructions causing the first display driver circuitry to execute the controlling of the first display according to the command, in response to checking, before the second signal is received, an expiration of a timer activated based on receiving the command transmitted at the first timing from the processor.

As described above, a head-wearable electronic device (e.g., the head-wearable electronic device 100) may comprise a head-wearable housing structure (e.g., the head-wearable housing structure 110), a display assembly (e.g., the display 120) including a first display (e.g., the first display 121) and a second display (e.g., the second display 122) respectively positioned in front of eyes of a user wearing the head-wearable housing structure, first display driver circuitry (e.g., the first display driver circuitry 221) connected to the first display, second display driver circuitry (e.g., the second display driver circuitry 222) connected to the second display, a processor assembly (e.g., the processor assembly 210) including one or more processing circuits, and a memory assembly (e.g., the memory assembly 220). The memory assembly may store instructions causing the processor assembly to transmit a command to the first display driver circuitry and transmit the command to the second display driver circuitry, while a first signal is transmitted from the first display driver circuitry to the second display driver circuitry and a second signal is transmitted from the second display driver circuitry to the first display driver circuitry.

For example, the memory assembly may store instructions causing each of the first display driver circuitry and the second display driver circuitry to defer controlling of each of the first display and the second display according to the command, until a signal transmitted from the first display driver circuitry to the second display driver circuitry is changed from the first signal to a third signal and a signal transmitted from the second display driver circuitry to the first display driver circuitry is changed from the second signal to a fourth signal, based on receiving the command paired with a predetermined command from the processor assembly, and execute controlling of each of the first display and the second display according to the command, while the signal transmitted from the first display driver circuitry to the second display driver circuitry is maintained as the first signal and the signal transmitted from the second display driver circuitry to the first display driver circuitry is maintained as the second signal, based on receiving the command not paired with the predetermined command from the processor assembly.

For example, the memory assembly may store instructions causing the first display driver circuitry to change the signal transmitted from the first display driver circuitry to the second display driver circuitry from the first signal to the third signal, in response to receiving the command paired with the predetermined command. For example, the memory assembly may store instructions causing the second display driver circuitry to change the signal transmitted from the second display driver circuitry to the first display driver circuitry from the second signal to the fourth signal, in response to receiving the command paired with the predetermined command.

For example, the memory assembly may store instructions causing the first display driver circuitry to maintain the signal transmitted from the first display driver circuitry to the second display driver circuitry as the first signal, in response to receiving the command not paired with the predetermined command. For example, the memory assembly may store instructions causing the second display driver circuitry to maintain the signal transmitted from the second display driver circuitry to the first display driver circuitry as the second signal, in response to receiving the command not paired with the predetermined command.

For example, the head-wearable electronic device may include a first interface used for the first signal and the third signal and connecting the second display driver circuitry to the first display driver circuitry, and a second interface used for the second signal and the fourth signal and connecting the first display driver circuitry to the second display driver circuitry.

For example, the one or more processing circuits may include a first display processing unit (DPU) connected to the first display driver circuitry and a second DPU connected to the second display driver circuitry. For example, the memory assembly may store instructions causing the first DPU to transmit the command to the first display driver circuitry. For example, the memory assembly may store instructions causing the second DPU to transmit the command to the second display driver circuitry.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A head-wearable electronic device comprising:
a head-wearable housing structure;
a display assembly including a first display and a second display respectively positioned over eyes of a user wearing the head-wearable housing structure;
first display driver circuitry connected to the first display;
second display driver circuitry connected to the second display; and
a processor, comprising one or more processing circuits, configured to:
transmit a command at a first timing to the first display driver circuitry; and
transmit the command at a second timing to the second display driver circuitry,
wherein the first display driver circuitry is configured to:
based on receiving the command transmitted at the first timing from the processor:
transmit, to the second display driver circuitry, a first signal indicating a reception of the command, and
defer controlling of the first display according to the command until a second signal indicating a reception of the command is received from the second display driver circuitry; and
synchronize the controlling of the first display according to the command with controlling of the second display according to the command by executing the controlling of the first display according to the command based on:
transmitting, to the second display driver circuitry, the first signal in response to receiving the command transmitted at the first timing from the processor, and
receiving the second signal transmitted from the second display driver circuitry in response to receiving the command transmitted at the second timing from the processor.

2. The head-wearable electronic device of claim 1, wherein the second display driver circuitry is configured to synchronize the controlling of the second display according to the command with the controlling of the first display according to the command by executing the controlling of the second display according to the command based on:
receiving the first signal transmitted from the first display driver circuitry in response to receiving the command transmitted at the first timing from the processor, and
transmitting the second signal to the first display driver circuitry in response to receiving the command transmitted at the second timing from the processor.

3. The head-wearable electronic device of claim 2, wherein the first display driver circuitry is further configured to:
based on executing the controlling of the first display according to the command, cease transmitting the first signal to the second display driver circuitry and transmit a third signal to the second display driver circuitry, and
wherein the second display driver circuitry is further configured to:
based on executing the controlling of the second display according to the command, cease transmitting the second signal to the first display driver circuitry and transmit a fourth signal to the first display driver circuitry.

4. The head-wearable electronic device of claim 3, wherein the first display driver circuitry is configured to:
while the third signal is transmitted to the second display driver circuitry and the fourth signal is received from the second display driver circuitry, receive the command transmitted at the first timing from the processor, and
wherein the second display driver circuitry is configured to:
while the third signal is received from the first display driver circuitry and the fourth signal is transmitted to the second display driver circuitry, receive the command transmitted at the second timing from the processor.

5. The head-wearable electronic device of claim 4, further comprising:
a first interface connecting the first display driver circuitry to the second display driver circuitry for the first signal and the third signal that are transmitted from the first display driver circuitry to the second display driver circuitry; and
a second interface connecting the second display driver circuity to the first display driver circuitry for the second signal and the fourth signal that are transmitted from the second display driver circuitry to the first display driver circuitry.

6. The head-wearable electronic device of claim 4, wherein the processor is further configured to:
before the command is transmitted to the first display driver circuitry at the first timing, transmit, to the first display driver circuitry, a predetermined command; and
before the command is transmitted to the second display driver circuitry at the second timing, transmit, to the second display driver circuitry, the predetermined command,
wherein the first display driver circuitry is configured to:
based on receiving, after the predetermined command is received, the command transmitted at the first timing from the processor:
cease transmitting the third signal to the second display driver circuitry, and
defer the controlling of the first display according to the command, until transmitting the first signal to the second display driver circuitry and receiving the second signal from the second display driver circuitry, and
wherein the second display driver circuitry is configured to:
based on receiving, after the predetermined command is received, the command transmitted at the second timing from the processor:
cease transmitting the fourth signal to the first display driver circuitry, and
defer the controlling of the second display according to the command, until transmitting the second signal to the first display driver circuitry and receiving the first signal from the first display driver circuitry.

7. The head-wearable electronic device of claim 6, wherein the processor is further configured to:
transmit, to the first display driver circuitry, another command at a third timing different from the first and second timings without transmitting the predetermined command to the first display driver circuitry; and
transmit, to the second display driver circuitry, the another command at a fourth timing different from the first, second, and third timings without transmitting the predetermined command to the second display driver circuitry,
wherein the first display driver circuitry is further configured to:
in response to receiving the another command transmitted at the third timing from the processor, maintain the third signal transmitted to the second display driver circuitry and execute controlling of the first display according to the another command,
wherein the second display driver circuitry is further configured to:
in response to receiving the another command transmitted at the fourth timing from the processor, maintain the fourth signal transmitted to the first display driver circuitry and execute controlling of the second display according to the another command, and
wherein the controlling of the first display according to the another command is executed independently of executing the controlling the second display according to the another command.

8. The head-wearable electronic device of claim 1, further comprising:
power management integrated circuitry (PMIC),
wherein the first display includes first sub-pixels,
wherein the second display includes second sub-pixels,
wherein the command indicates releasing a sleep state of the display assembly,
wherein the first display driver circuitry is configured to:
based on receiving the command transmitted at the first timing from the processor, until transmitting the first signal to the second display driver circuitry and receiving the second signal from the second display driver circuitry, defer the controlling of the first display according to the command through deferring initializing voltages applied to a first and second electrodes of a first light emission element in each of the first sub-pixels; and
based on transmitting the first signal to the second display driver circuitry and receiving the second signal from the second display driver circuitry, synchronize releasing a sleep state of the first display according to the command with releasing a sleep state of the second display according to the command by executing the controlling of the first display according to the command through:
initializing the voltages respectively applied to the first and second electrodes of the first light emission element, and
after the voltages respective applied to the first and second electrodes of the first light emission element are initialized:
transmitting, to the PMIC, a first request to cause the PMIC to apply, to each of the first electrode of the first light emission element and a first electrode of the second light emission element, a first driving voltage, and
transmitting, to the PMIC, a second request to cause the PMIC to apply, to each of the second electrode of the first light emission element and a second electrode of the second light emission element, a second driving voltage.

9. The head-wearable electronic device of claim 8, wherein the second display driver circuitry is configured to:
based on receiving the first signal from the first display driver circuitry and transmitting the second signal to the first display driver circuitry, execute the controlling of the second display according to the command through initializing voltages applied to the first and second electrodes of the second light emission element,
wherein the first display driver circuitry is further configured to:
release the sleep state of the first display using:
the first driving voltage applied from the PMIC in response to the first request from the first display driver circuitry to the PMIC, and
the second driving voltage applied from the PMIC in response to the second request from the first display driver circuitry to the PMIC, and
wherein the second display driver circuitry is further configured to:
after the voltages applied to the first and second electrodes of the second light emission element are initialized, obtain the first driving voltage applied from the PMIC in response to the first request from the first display driver circuitry to the PMIC and the second driving voltage applied from the PMIC in response to the second request from the first display driver circuitry to the PMIC; and
release the sleep state of the second display using:
the first driving voltage applied from the PMIC to the second display driver circuity, and
the second driving voltage applied from the PMIC to the second display driver circuitry.

10. The head-wearable electronic device of claim 1, wherein the command indicates changing a brightness level of each of the first and second displays,
wherein the first display driver circuitry is configured to:
based on receiving the command transmitted at the first timing from the processor, until transmitting the first signal to the second display driver circuitry and receiving the second signal from the second display driver circuitry, defer the controlling of the first display according to the command through deferring changing a brightness level of the first display; and
based on transmitting the first signal to the second display driver circuitry and receiving the second signal from the second display driver circuitry, synchronize changing the brightness level of the first display according to the command with changing a brightness level of the second display according to the command by executing the controlling of the first display according to the command in accordance with changing the brightness level of the first display.

11. The head-wearable electronic device of claim 10, wherein the second display driver circuitry is configured to:
based on receiving the first signal from the first display driver circuitry and transmitting the second signal to the first display driver circuitry, execute the controlling of the second display according to the command through changing the brightness level of the second display.

12. The head-wearable electronic device of claim 1, wherein the one or mor processing circuits include:
a first display processing unit (DPU) connected to the first display driver circuitry, and
a second DPU connected to the second display driver circuitry,
wherein the processor is configured to:
transmit the command at the first timing to the first display driver circuitry using the first DPU; and
transmit the command at the second timing to the second display driver circuitry using the second DPU.

13. The head-wearable electronic device of claim 1, wherein the first display driver circuitry is configured to:
in response to a timing of a vertical synchronization signal for the first display caused after transmitting the first signal to the second display driver circuitry and receiving the second signal from the second display driver circuitry, execute the controlling of the first display according to the command.

14. The head-wearable electronic device of claim 13, wherein the second display driver circuitry is configured to:
in response to a timing of a vertical synchronization signal for the second display caused after receiving the first signal from the first display driver circuitry and transmitting the second signal to the first display driver circuitry, execute the controlling of the second display according to the command.

15. The head-wearable electronic device of claim 1, wherein the first display driver circuitry is further configured to execute the controlling of the first display according to the command, in response to checking, before the second signal is received, an expiration of a timer activated based on receiving the command transmitted at the first timing from the processor.
